# EUROPEAN PATENT SPECIFICATION

(11) **EP 2 817 560 B1**
(45) Date of publication and mention of the grant of the patent: **14.10.2015**
(21) Application number: 13752421.1
(22) Date of filing: 21.02.2013
(51) Int. Cl.: F21V 21/008, F21V 21/16, H02G 7/02, H02G 7/05, F21S 8/06, F21W 121/00

(54) **TORSION DEVICE FOR CABLE SUPPORTING A HANGING OBJECT**
SPANNVORRICHTUNG FÜR EIN KABEL ZUM TRAGEN EINES HÄNGENDEN OBJEKTS
DISPOSITIF DE TORSION POUR CÂBLE DE SUPPORT D'UN OBJET SUSPENDU

(30) Priority: 21.02.2012 SE 1250149
(43) Date of publication of application: 31.12.2014
(73) Proprietor: KL Solutions AB, 429 31 Kullavik (SE)
(72) Inventor: CEDERSCHIÖLD, Alexander, S-411 19 Gothenburg (SE); FORSBERG, Klas, S-429 31 Kullavik (SE)
(74) Representative: Valea AB
(86) International application number: PCT/SE2013/050149
(87) International publication number: WO 2013/126010

(56) References cited:
- WO-A1-02/23086
- WO-A1-2008/095491
- DE-C1- 4 311 635
- DE-U1- 8 520 830
- DE-U1- 29 518 031
- DE-U1- 29 518 031
- GB-A- 190 410 076
- US-A- 6 022 129
- US-A1- 2007 081 363

## Description

### TECHNICAL FIELD

The present invention concerns a torsion device. The present invention further concerns a method for orienting an object hanging on a cable.

### BACKGROUND OF THE INVENTION

It is preferable to hang a lot of objects that are suspended by a cable in such a way that they hang with a desired orientation. For example, Christmas decorations, such as illuminated or non-illuminated stars, are often suspended in windows at Christmas. Each star is suspended by a cable. The cable may be an electric cable connected to an electric socket mounted on the ceiling or on a wall in the vicinity of the window. Alternatively, a star may be suspended from a non-electric cable that is attached to a curtain rail, a hook or a nail in the vicinity of the window.

Ideally, the star should be oriented so that the plane of its front surface hangs in a plane parallel to the plane of the window so that the entire front surface of the star is visible when viewed from an angle perpendicular to the plane of the window. Since such stars are usually manufactured from lightweight material, such as paper or fabric, it is quite common that small torsional forces in the cable suspending a star cause the star to hang with a less desirable orientation with the plane of its front surface oriented at an angle to the plane of the window, whereby only a part of the front surface of the star is visible when viewed from an angle perpendicular to the plane of the window.

This problem may be solved by providing reinforcing wires along the cable to make the cable/suspension means more rigid, and thereby more torsion-resistant. Such a solution can however be complex and time consuming to provide, and less aesthetically pleasing than suspending a star on a non-reinforced cable.

DE 295 18 031 discloses a spindle for adjusting the height of hanging lamps which comprises a housing, a mandrel, a cable reel and two cable grooves into which a lamp cable is inserted. By rotating the spindle housing in a clockwise direction and at the same time holding the spindle mandrel, the light cable is pulled into the spindle housing by the cable reel and wound onto a cone inside the spindle housing. This enables a height adjustment of the hanging lamp to be achieved.

### SUMMARY OF THE INVENTION

An object of the invention is to enable an object that is suspended from a cable to be oriented in a desired position.

This aim is achieved by a torsion device that is suitable for mounting along a cable supporting a hanging object. The torsion device comprises a first component that is arranged to be fixedly mounted on a first part of the cable, i.e. a first point or area of the cable, and a second component that is arranged to be fixedly mounted on a second part of the cable, i.e. a second point or area of the cable, i.e. the torsion device comprises at least two separate or united components which are arranged to grip two parts of the cable that are a distance apart. The distance between the two parts of the cable can be a few millimetres, or a few centimetres, or more, depending on the application.

The torsion device also comprises a connection means to rotatably connect the first component to the second component, whereby the first component can be connected to the second component and then rotated with respect thereto. Alternatively, the first component can be rotated with respect to the second component and then connected thereto.

The torsion device further comprises locking means to lock the first component and the second component in a desired relative position. A torsion between the first part of the cable and the second part of the cable may thereby be established and/or adjusted by rotating the first component with respect to the second component and maintained by locking the first component and the second component in a desired relative position, thereby enabling the hanging object to be oriented in a desired position.

Such a torsion device allows a hanging object to be oriented in a desired position in a quick, simple and cost effective way. Furthermore, the torsion device may be used with any hanging object without requiring any modification to be made to the hanging object or the cable from which it is suspended.

The expression "cable" as used in this document is intended to mean any cable, cord, or flexible line that can be subjected to torsion manually, i.e. that can be twisted by hand by the exertion of forces tending to turn one part of the cable about its longitudinal axis while another part of the cable is held fast or turned in the opposite direction.

The expression "a first component is arranged to be fixedly mounted on a first part of the cable" is intended to mean that the first component is mounted on a first part of a cable in a way that does not allow rotational movement between the first component and the first part of the cable. Likewise, the expression "a second component is arranged to be fixedly mounted on a second part of the cable" is intended to mean that the second component is mounted on a second part of a cable in a way that does not allow rotational movement between the second component and the second part of the cable. The first component and the second component may be arranged to be removably or non-removably fixedly mounted along the cable. The first component and/or the second component may however be arranged to move along the cable's longitudinal axis, whereby the height of the torsion device on a cable of a hanging object may be adjusted as desired while maintaining the desired torsion in the cable.

According to an embodiment of the invention the first component and the second component constitute a male and a female connector.

According to another embodiment of the invention the first component and the second component comprise a slot and/or an opening for receiving the cable. The first component and the second component may for example each comprise a slot extending along their longitudinal axis or parallel thereto for receiving a cable by pressing the cable into the slot. Alternatively, the first component and second component may each comprise an opening, such as a central opening, for receiving a cable by threading the cable through the opening. According to an embodiment of the invention, the slot and/or opening may comprise resilient material, such as rubber, so that the slot/and/or opening can receive a cables of different size and/or cross-sectional shape.

According to a further embodiment of the invention the first component and the second component are arranged to be fixedly mounted along the cable by means of at least one of the following: friction, adhesive, a snap fit connection or by any other suitable means.

According to an embodiment of the invention the connection means are arranged to rotatably connect the first component to the second component to enable rotation in a stepwise manner. Alternatively, the connection means are arranged to rotatably connect the first component to the second component to enable rotation in a continuous manner.

According to another embodiment of the invention the first component and the second component each comprise a plurality of ribs that are preferably arranged to function as both the connection and locking means. The ribs may be arranged to function like the teeth of cogs that mesh with one another in order to transmit torque and allow the first component to rotate with respect to the second component, whereby the ribs may be arranged to prevent rotational motion between the first component and the second component unless a sufficiently large torque is provided by a user to rotate the first component with respect to the second component.

Alternatively, the ribs may be arranged to prevent further rotational motion between the first component and the second component after the first component has been rotated with respect to the second component by a user and then connected to the second component.

According to a further embodiment of the invention the first component and/or the second component comprise(s) at least one of the following: polyethylene, polyethylene or polypropylene; acrylonitrile butadiene styrene (ABS), polycarbonate, polyester, rubber, a thermoplastic, a thermoplastic elastomer (TPE), silicone, a thermoset plastic, wood, glass, metal. The first component and/or the second component may be manufactured by injection moulding using any suitable material.

According to an embodiment of the invention the cable is an electric cable.

The present invention also concerns a method for orienting an object hanging on a cable. The method comprises the steps mounting a torsion device according to any of the embodiments of the invention along a cable, and establishing and/or adjusting and/or maintaining torsion in the cable using the torsion device thereby enabling the hanging object to be oriented in a desired position.

### BRIEF DESCRIPTION OF THE DRAWINGS

The present invention will hereinafter be further explained by means of non-limiting examples with reference to the appended figures where;
- Figures 1 & 2: show a hanging object and a torsion device according to an embodiment of the invention from different angles,
- Figures 3 & 4: show a torsion according to an embodiment of the invention, and
- Figure 5: is a flow diagram showing the steps of a method according to an embodiment of the invention.

It should be noted that the drawings have not been drawn to scale and that the dimensions of certain features have been exaggerated for the sake of clarity.

### DETAILED DESCRIPTION OF EMBODIMENTS

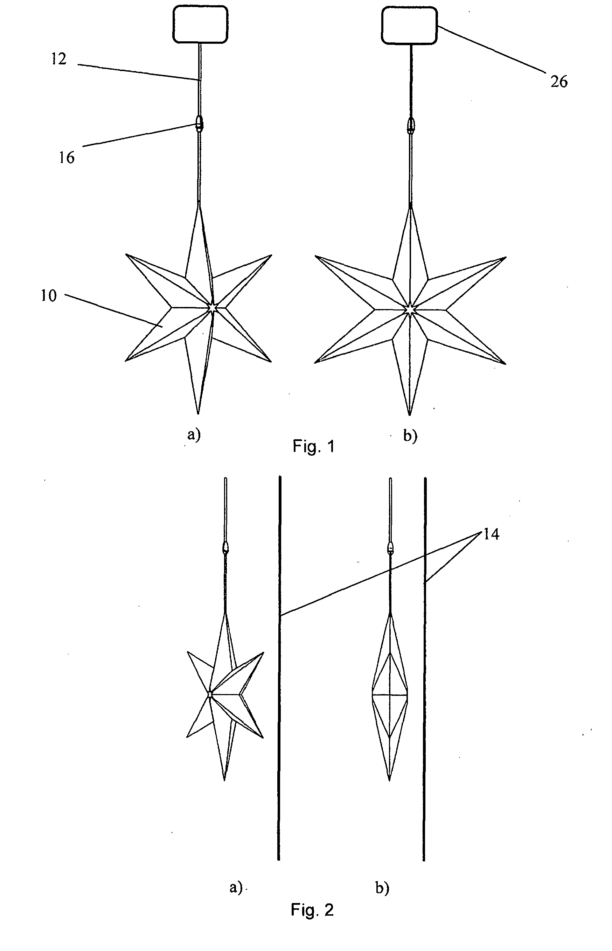

Figures 1 and 2 show an object 10, namely a Christmas star decoration, hanging from a cable 12, such as an electric cable, in a window 14. A torsion device 16 is mounted along the cable 12. In figures 1a and 2a the undesired torsion in the cable 12 has not yet been adjusted using the torsion device 16. In figures 1b and 2b the undesired torsion in the cable 12 has been adjusted using the torsion device 16 to orient the object 10 in a desired position.

Figures 1 a and 1 b show the object 10 as viewed from an angle perpendicular to the plane of the window 14. Figures 2a and 2b show the object 10 viewed along the plane of the window 14. As can be seen in figures 1 a and 2a, the plane of front face of the object 10 is hanging with an undesired orientation with the plane of its front face at an angle to the plane of the window 14. In figures 1b and 2b the object 10 is hanging with the plane of its front face oriented parallel to the plane of the window 14.

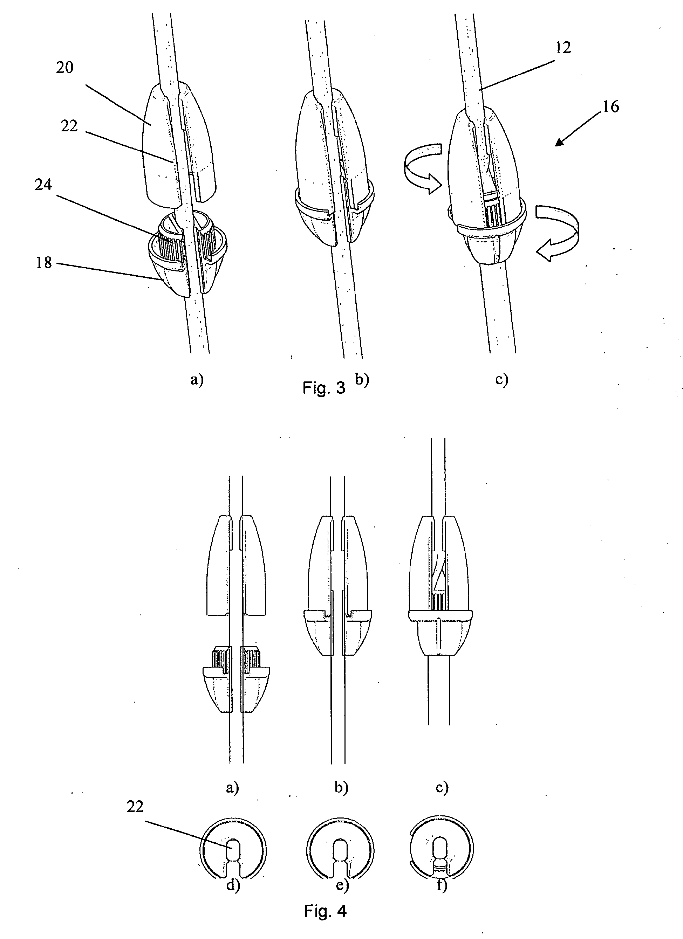

Figures 3 and 4 shows a torsion device 16 according to an embodiment of the present invention mounted along a cable 12 supporting a hanging object. The torsion device is shown in perspective view in figures 3a-c, from the side in figures 4a-c, and from above in figures 4d-f. The torsion device 16 comprises a first component 18 that is arranged to be fixedly mounted on a first part of the cable 12 and a second component 20 that is arranged to be fixedly mounted on a second part of the cable 12, as shown in figures 3a and 4a. The distance between the first part of the cable 12 and the second part of the cable 12 over which the cable 12 can be twisted may for example be 1 cm. In the illustrated embodiment the first component 18 is a male connector and the second component 20 is a female connector. Both the first component 18 and the second component 20 are injection moulded from a suitable plastic, such as polyethylene.

The first component 18 and the second component 20 comprise a slot 22 for receiving the cable 12. The slot 22 has an oval cross section to correspond to the cross section of the cable 12. A slot 22 or opening can however have any suitable cross-section. The first component 18 and the second component 20 are arranged to be fixedly mounted along the cable 12 by means of friction.

The first component 18 and the second component 20 each comprise a plurality of ribs 24 that are arranged to function as the connection and locking means, i.e. when the first component 18 and the second component 20 are brought together to be connected, as shown in figures 3b and 4b, the ribs 24 of the first component 18 will slide into grooves between the ribs of the second component 20 an connect the two components 18 and 20. A torsion device 16 according to the present invention may comprise additional locking means, such as a snap fit connection, to lock the first component 18 and the second component 20 together to prevent them moving if/when the cable 12 expands or moves. The first component 18 may for example comprise a flexible male element, such as a flange, that is arranged to be received in a corresponding female element, such as a slot, in the second component 20, when the additional locking means is activated.

The first component 18 may then be rotated with respect to the second component 20 by hand by forcing the ribs 24 of the first component 18 to move over the ribs of the second component 20 in the direction indicated by the arrows in figures 3c and 4c. It should be noted that one component 18 or 20 can be held fast or turned in the opposite direction to the other component 20 or 18. Since the first component 18 and the second component 20 are fixedly attached to the cable 12 at a first part of the cable 12 and a second part of the cable 12 respectively, the cable 12 will be twisted between the first part of the cable 12 and the second part of the cable 12 when the first component 18 is rotated with respect to the second component 20. The first component 18 and/or the second component 20 should be rotated until the right amount of torsion has been established in the cable 12 and the object 10 hanging from the cable 12 has acquired the desired orientation.

In the illustrated embodiment the intermeshed ribs 24 of the first component 18 and the second component 20 will function as locking means and prevent the first component 18 from rotation with respect to the second component 20 unless a sufficiently large torque is provided by a user. An additional locking means could however be provided on a torsion device according to the present invention to prevent further rotation.

If the orientation of the hanging object 10 changes after it has been correctly oriented, the torsion in its cable 12 can again be adjusted by rotation the first component 18 with respect to the second component 20 until a desired orientation has again been achieved.

The torsion device 16 according to an embodiment of the invention may be arranged to enable rotation in a stepwise or continuous manner. The torsion device 16 may also be arranged to allow only a limited amount of rotation to prevent a cable 12 from being damaged.

A torsion device 16 according to the present invention may be of any size or shape. If a torsion device 16 is arranged to be mounted in a visible position, the torsion device 16 may be arranged to have a decorative form, such as the shape of a star, whereby the decorative form may be utilized to enable the torsion device 16 to be more easily gripped, connected and rotated without spoiling the aesthetic appearance of a hanging object 10.

In the illustrated embodiment the torsion device 16 is arranged to be mounted along the cable 12 between the hanging object 10 and a connecting device 26 that attaches the cable 12 to an electric socket or a mechanical support. The position of such a connecting device 26 is indicated in figures 1 a and 1 b.

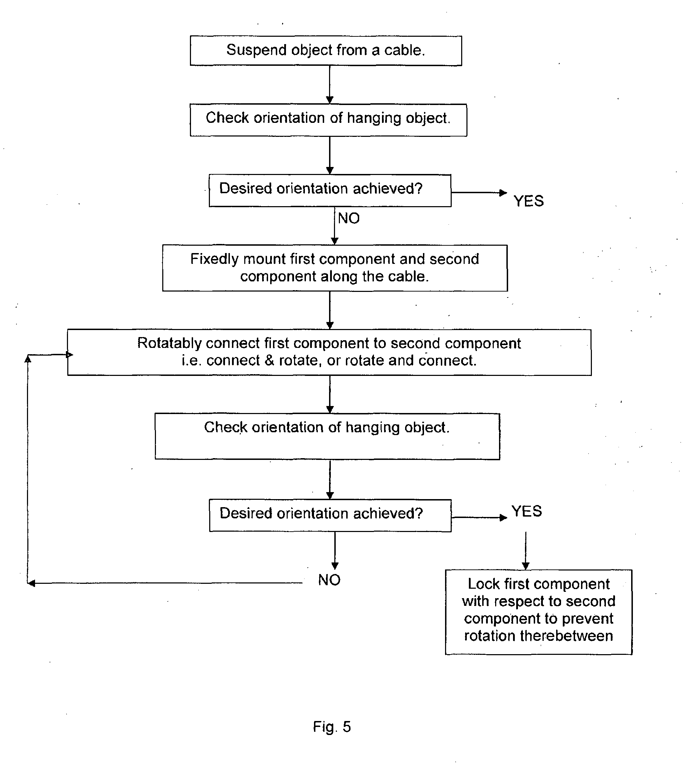

Figure 5 shows a flow chart showing the steps of a method for orienting an object 10 hanging on a cable 12. The method comprises the steps of suspending an object 10 from a cable 12 and checking the orientation of the object 10. If a desired orientation is achieved, no further adjustments need to be made, a torsion device 16 according to the present invention may however be used to maintain the desired orientation by locking the first component 18 and the second component 20 of the torsion device 16 to prevent rotation therebetween.

If a desired orientation is not achieved, a first component 18 and a second component 20 of the torsion device 16 may be fixedly mounted along the cable 12 and rotatably connected. The first component 18 may namely be connected to the second component 20 then rotated with respect thereto until a desired orientation of the hanging object 10 is achieved. Alternatively the first component 18 may be rotated with respect to the second component 20 until a desired orientation of the hanging object 10 is achieved and then the first component 18 may be connected to the second component 20. A desired orientation may be maintained by locking the first component 18 and the second component 20 of the torsion device 16 to prevent rotation therebetween.

Rather than mounting a torsion device 16 according to the present invention along a cable 12, a user can use a connecting device 26, a cable 12 or a hanging object 10 comprising at least part of a torsion device 16 according to the present invention to enable the hanging object 10 to be oriented in a desired position.

Further modifications of the invention within the scope of the claims would be apparent to a skilled person. There are namely many ways in which a skilled person may design a torsion device, connecting device, cable or hanging object so that a cable may be twisted and held, or held and twisted, to enable a hanging object to be oriented in a desired position.

## Claims

1. Torsion device (16) for mounting along a cable (12) supporting a hanging object (10), **characterized in that** said torsion device (16) comprises a first component (18) that is arranged to be fixedly mounted on a first part of said cable (12) and a second component (20) that is arranged to be fixedly mounted on a second part of said cable (12), connection means to rotatably connect said first component (18) to said second component (20), and locking means to lock the first component (18) and the second component (20) in a desired relative position, whereby a torsion between said first part of said cable (12) and said second part of said cable (12) may be established and/or adjusted and maintained, thereby enabling the orientation of said hanging object (10) to be changed.

2. Torsion device (16) according to claim 1, **characterized in that** said first component (18) and said second component (20) constitute a male and a female connector.

3. Torsion device (16) according to claim 1 or 2, **characterized in that** said first component (18) and said second component (20) comprise a slot (22) and/or an opening for receiving said cable (12).

4. Torsion device (16) according to any of the preceding claims, **characterized in that** said first component (18) and said second component (20) are arranged to be fixedly mounted along said cable (12) by means of at least one of the following: friction, adhesive, a snap fit connection.

5. Torsion device (16) according to any of the preceding claims, **characterized in that** said connection means are arranged to rotatably connect said first component (18) to said second component (20) to enable rotation in a stepwise manner.

6. Torsion device (16) according to any of claims 1-4, **characterized in that** said connection means are arranged to rotatably connect said first component (18) to said second component (20) to enable rotation in a continuous manner.

7. Torsion device (16) according to any of the preceding claims, **characterized in that** said first component (18) and said second component (20) each comprise a plurality of ribs (24) that are arranged to function as said connection and locking means.

8. Torsion device (16) according to any of the preceding claims, **characterized in that** said first component (18) and/or said second component (20) comprise(s) at least one of the following: polyethylene, polyethylene or polypropylene; acrylonitrile butadiene styrene (ABS), polycarbonate, polyester, rubber, a thermoplastic, a thermoplastic elastomer (TPE), silicone, a thermoset plastic, wood, glass, metal.

9. Torsion device (16) according to any of the preceding claims, **characterized in that** said cable (12) is an electric cable (12).

10. Method for orienting an object (10) hanging on a cable (12), **characterized in that** it comprises the steps of mounting a torsion device (16) according to any of claims 1-9 along a cable (12), , and establishing and/or adjusting and maintaining torsion in the cable (12) using said torsion device (16) thereby enabling the orientation of said hanging object (10) to be changed.

## Patentansprüche

1. Torsionsvorrichtung (16) zur Anbringung entlang eines Kabels (12), das ein hängendes Objekt (10) trägt, **dadurch gekennzeichnet, dass** die Torsionsvorrichtung (16) ein erstes Bauteil (18), das dazu angeordnet ist, an einem ersten Teil des Kabels (12) fest angebracht zu sein, und ein zweites Bauteil (20), das dazu angeordnet ist, an einem zweiten Teil des Kabels (12) fest angebracht zu sein, eine Verbindungseinrichtung zum drehbaren Verbinden des ersten Bauteils (18) mit dem zweiten Bauteil (20) und eine Verriegelungseinrichtung zum Verriegeln des ersten Bauteils (18) und des zweiten Bauteils (20) in einer gewünschten relativen Position umfasst, wodurch eine Torsion zwischen dem ersten Teil des Kabels (12) und dem zweiten Teil des Kabels (12) herstellbar und/oder einstellbar und aufrechterhaltbar ist, wodurch eine Änderung der Ausrichtung des hängenden Objektes (10) ermöglicht wird.

2. Torsionsvorrichtung (16) nach Anspruch 1, **dadurch gekennzeichnet, dass** das erste Bauteil (18) und das zweite Bauteil (20) einen Steckverbinder und einen Aufnahmeverbinder bilden.

3. Torsionsvorrichtung (16) nach Anspruch 1 oder 2, **dadurch gekennzeichnet, dass** das erste Bauteil (18) und das zweite Bauteil (20) einen Schlitz (22) und/oder eine Öffnung zum Aufnehmen des Kabels (12) umfassen.

4. Torsionsvorrichtung (16) nach einem der vorstehenden Ansprüche, **dadurch gekennzeichnet, dass** das erste Bauteil (18) und das zweite Bauteil (20) dazu angeordnet sind, entlang des Kabels (12) durch mindestens eines von Folgendem fest angebracht zu sein: Reibung, Klebstoff, eine Einrastverbindung.

5. Torsionsvorrichtung (16) nach einem der vorstehenden Ansprüche, **dadurch gekennzeichnet, dass** die Verbindungseinrichtung dazu angeordnet ist, das erste Bauteil (18) drehbar mit dem zweiten Bauteil (20) zu verbinden, um eine schrittweise Drehung zu ermöglichen.

6. Torsionsvorrichtung (16) nach einem der Ansprüche 1 - 4, **dadurch gekennzeichnet, dass** die Verbindungseinrichtung dazu angeordnet ist, das erste Bauteil (18) drehbar mit dem zweiten Bauteil (20) zu verbinden, um eine kontinuierliche Drehung zu ermöglichen.

7. Torsionsvorrichtung (16) nach einem der vorstehenden Ansprüche, **dadurch gekennzeichnet, dass** das erste Bauteil (18) und das zweite Bauteil (20) jeweils eine Vielzahl von Rippen (24) umfassen, die dazu angeordnet sind, als die Verbindungs- und Verriegelungseinrichtung zu wirken.

8. Torsionsvorrichtung (16) nach einem der vorstehenden Ansprüche, **dadurch gekennzeichnet, dass** das erste Bauteil (18) und/oder das zweite Bauteil (20) mindestens eines von Folgendem umfasst bzw. umfassen: Polyethylen, Polyethylen oder Polypropylen; AcrylnitrilButadien-Styrol (ABS), Polycarbonat, Polyester, Gummi, ein Thermoplast, ein thermoplastisches Elastomer (TPE), Silicon, einen wärmehärtenden Kunststoff, Holz, Glas, Metall.

9. Torsionsvorrichtung (16) nach einem der vorstehenden Ansprüche, **dadurch gekennzeichnet, dass** das Kabel (12) ein elektrisches Kabel (12) ist.

10. Verfahren zum Ausrichten eines Objektes (10), das an einem Kabel (12) hängt, **dadurch gekennzeichnet, dass** es die Schritte umfasst: Anbringen einer Torsionsvorrichtung (16) nach einem der Ansprüche 1 - 9 entlang eines Kabels (12) und Herstellen und/oder Einstellen und Aufrechterhalten von Torsion in dem Kabel (12) unter Verwendung der Torsionsvorrichtung (16), wodurch eine Änderung der Ausrichtung des hängenden Objektes (10) ermöglicht wird.

## Revendications

1. Dispositif de torsion (16) pour le montage le long d'un câble (12) supportant un objet suspendu (10), **caractérisé en ce que** ledit dispositif de torsion (16) comprend un premier composant (18) qui est agencé pour être monté par fixation sur une première partie dudit câble (12) et un second composant (20) qui est agencé pour être monté par fixation sur une seconde partie dudit câble (20), des moyens de connexion pour connecter de manière rotative ledit premier composant (18) audit second composant (20) et des moyens de verrouillage pour verrouiller le premier composant (18) et le second composant (20) dans une position relative souhaitée, moyennant quoi une torsion entre ladite première partie dudit câble (12) et ladite seconde partie dudit câble (12) peut être établie et/ou ajustée et maintenue, permettant ainsi de changer l'orientation dudit objet suspendu (10).

2. Dispositif de torsion (16) selon la revendication 1, **caractérisé en ce que** ledit premier composant (18) et ledit second composant (20) constituent un connecteur male et un connecteur femelle.

3. Dispositif de torsion (16) selon la revendication 1 ou 2, **caractérisé en ce que** ledit premier composant (18) et ledit second composant (20) comprennent une fente (22) et/ou une ouverture pour la réception dudit câble (12).

4. Dispositif de torsion (16) selon l'une quelconque des revendications précédentes, **caractérisé en ce que** ledit premier composant (18) et ledit second composant (20) sont agencés pour être montés par fixation le long dudit câble (12) au moins par friction, adhésion et/ou connexion par encliquetage.

5. Dispositif de torsion (16) selon l'une quelconque des revendications précédentes, **caractérisé en ce que** lesdits moyens de connexion sont agencés de sorte à relier de manière rotative ledit premier composant (18) audit second composant (20) pour permettre la rotation de manière progressive.

6. Dispositif de torsion (16) selon l'une quelconque des revendications 1 à 4, **caractérisé en ce que** lesdits moyens de connexion sont agencés de sorte à relier de manière rotative ledit premier composant (18) audit second composant (20) pour permettre la rotation de manière continue.

7. Dispositif de torsion (16) selon l'une quelconque des revendications précédentes, **caractérisé en ce que** ledit premier composant (18) et ledit second composant (20) comprennent chacun une pluralité de nervures (24) qui sont agencées pour fonctionner comme lesdits moyens de connexion et de verrouillage.

8. Dispositif de torsion (16) selon l'une quelconque des revendications précédentes, **caractérisé en ce que** ledit premier composant (18) et/ou ledit second composant (20) comprend au moins l'un des matériaux suivants : polyéthylène, polyéthylène ou polypropylène ; acrylonitrile butadiène styrène (ABS), polycarbonate, polyester, caoutchouc, un thermoplastique, un élastomère thermoplastique (TPE), silicone, un plastique thermodurcissable, bois, verre, métal.

9. Dispositif de torsion (16) selon l'une quelconque des revendications précédentes, **caractérisé en ce que** ledit câble (12) est un câble électrique (12).

10. Procédé d'orientation d'un objet (10) suspendu à un câble (12), **caractérisé en ce qu'**il comprend les étapes de montage d'un dispositif de torsion (16) selon l'une quelconque des revendications 1 à 9 le long d'un câble (12), et d'établissement et/ou d'ajustement et de maintien de la torsion dans le câble (12) en utilisant ledit dispositif de torsion (16), permettant ainsi même de changer l'orientation dudit objet suspendu (10).
